# EUROPEAN PATENT SPECIFICATION

(11) **EP 4 304 216 B1**
(45) Date of publication and mention of the grant of the patent: **19.08.2026**
(21) Application number: 22183637.2
(22) Date of filing: 07.07.2022
(51) Int. Cl.: H04W 4/48, H04L 67/12, H04W 4/70, H04L 12/46, H04W 4/40

(54) **VEHICLE COMMUNICATION SYSTEM, CONTROL UNIT AND METHOD FOR ENABLING COMMUNICATION BETWEEN A MAIN CONTROLLER OF A HEAVY-DUTY VEHICLE AND ONE OR MORE ADDON MODULE(S)**
FAHRZEUGKOMMUNIKATIONSSYSTEM, STEUEREINHEIT UND VERFAHREN ZUM ERMÖGLICHEN DER KOMMUNIKATION ZWISCHEN EINEM HAUPTSTEUERGERÄT EINES SCHWERLASTFAHRZEUGS UND EINEM ODER MEHREREN ZUSATZMODUL(EN)
SYSTÈME DE COMMUNICATION DE VÉHICULE, UNITÉ DE COMMANDE ET PROCÉDÉ POUR PERMETTRE UNE COMMUNICATION ENTRE UN ORGANE DE COMMANDE PRINCIPAL D'UN VÉHICULE LOURD ET UN OU PLUSIEURS MODULES ADDON

(43) Date of publication of application: 10.01.2024
(73) Proprietor: VOLVO TRUCK CORPORATION, 405 08 Göteborg (SE)
(72) Inventor: STRÖMBERG, Bo, 426 53 Västra Frölunda (SE); SHIRE, Joshua, 411 39 Göteborg (SE)
(74) Representative: Valea AB

(56) References cited:
- WO-A2-2009/042256
- US-A1- 2007 038 346
- US-A1- 2020 366 520

## Description

### TECHNICAL FIELD

The present disclosure relates generally to a vehicle communication system, a control unit, a method performed by the control unit and a heavy-duty vehicle. More particularly, the present disclosure relates to enabling communication between a main controller of a heavy-duty vehicle and one or more addon module(s) arranged to be connected to the heavy-duty vehicle.

The invention can be applied in heavy-duty vehicles, such as trucks, buses and construction equipment. Although the invention may be described with respect to a truck, the invention is not restricted to this particular vehicle, but may also be used in other vehicles such as buses, trailers, wheel loaders, articulated haulers, excavators, backhoe loaders, passenger cars, marine vessels etc. It may also be applied in various industrial construction machines or working machines. It is applicable in fully electrically operated vehicles as well as in hybrid vehicles, comprising also a combustion engine, and in vehicles only operated by a combustion engine, i.e. not having any electrical engine. The term vehicle may be used herein when referring to any of the above types of vehicles.

### BACKGROUND

Vehicle communication is a field of technology that is constantly developing. It is an increased need for communication and transfer of data and information for example internally within a vehicle, between a towing truck and a connected trailer, between multiple vehicles in a fleet etc. Information security is also important in such communication.

Today, vehicles communicate over a Controller Area Network (CAN) with various addon modules which offer limited functionality and flexibility. An addon module may be for example a superstructure, trailer, accessories, equipment etc., and a vehicle, e.g. a truck or a towing truck may be arranged to be connected to one more such addon modules. A superstructure may be for example a concrete pump, a bucket, a device mounted on the vehicle's chassis to carry load or support work to be done etc.

US 2020/366520 A1 discloses a tractor trailer vehicle area network with a trailer subnetwork.

US 2007/0038346 A1 discloses a system and method of wireless communication between a trailer and a tractor.

WO 2009/042256 A2 discloses to establish and secure a unique wireless RF link between a tractor and a trailer using a wired connection.

However, there is a need to improve communication between a heavy-duty vehicle and one or more addon modules.

### SUMMARY

An object of the invention is to obviate at least one of the above disadvantages and enable improved communication between a main controller of a heavy-duty vehicle and one or more addon module(s) arranged to be connected to the heavy-duty vehicle.

According to a first aspect, the object is achieved by a vehicle communication system according to claim 1. The vehicle communication system is for enabling communication between a main controller of a heavy-duty vehicle and one or more addon module(s) arranged to be connected to the heavy-duty vehicle. The vehicle communication system comprises a logical network segment arranged for communication between each addon module and the main controller thereby enabling each addon module to communicate with the main controller over a separate logical network segment.

By the provision of a logical network segment for communication between each addon module and the main controller of the heavy-duty vehicle, the advantage of enabling each addon module to communicate with the main controller over a separate logical network segment is provided. Provisioning the logical network segment enables a secure connection between each addon module and the main controller.

Optionally, the main controller may be arranged to communicate with the one or more addon module(s) via an Application Program Interface (API). An advantage of the API is to give access to data in an interface in a defined, secure and controlled way. An API abstracts the inner workings of a system to a standard, publishable interface that can easily be developed towards and integrated by addon modules from multiple vendors. The communication may be bi-directional, i.e. the main controller and the add on module may communicate with one another via the API.

Optionally, the vehicle communication system may comprise an in-vehicle application controller arranged to directly communicate with the one or more addon modules via the respective logical network segment. An advantage of using having an in-vehicle application controller may be that applications can be hosted and run in a secure way in their own "sandbox" without them knowing about or interfere with each other. The in-vehicle app controller may allow users to interface with addon modules without any need for installation of addon module vendor specific systems. The in-vehicle application controller may be arranged to host applications from multiple vendors.

Optionally, each logical network segment may be a wired communication link or a wireless communication link. An advantage of a wired communication link may be that it enables fast communication, it is reliable, stable and secure. An advantage of a wireless communication link may be that it enables mobility, installation costs are low, it does not require much hardware.

Optionally, the communication that the logical network segment is arranged for may comprise vehicle data arranged for controlling one or more vehicle functions. An advantage of this may be that vehicle data arranged for controlling one or more vehicle functions are sent via a secure connection between each addon module and the main controller. This reduces the risk for unauthorized use of the vehicle data, it reduces the risk for unauthorized modification of the vehicle data. Vehicle data arranged for controlling one or more vehicle functions may be associated driving safety, and the driving safety is increased when the vehicle data may be sent via a secure connection.

According to a second aspect, the object is achieved by a method according to claim 5.

The method is performed by a control unit and is for enabling communication between a main controller of a heavy-duty vehicle and one or more addon module(s) arranged to be connected to the heavy-duty vehicle. The control unit initiates setup of a separate logical network segment between each addon module and the main controller, thereby enabling each addon module to communicate with the main controller over a separate logical network segment. Advantages and effects of the second aspect of the invention are similar to the advantages and effects with respect to the first aspect of the invention. It shall also be noted that all embodiments of the first aspect of the invention are applicable to and combinable with all embodiments of the second aspect of the invention and vice versa.

Optionally, the communication between each addon module and the main controller may go via an API.

Optionally, an in-vehicle app controller may communicate directly to the one or more addon modules via the respective logical network segment.

Optionally, each logical network segment may be a wired communication link or a wireless communication link. An advantage of a wired communication link may be that it enables fast communication, it is reliable, stable and secure. An advantage of a wireless communication link may be that it enables mobility, installation costs are low, it does not require much hardware.

Optionally, the communication between each addon module and the main controller via the respective logical network segment may comprise vehicle data arranged for controlling one or more vehicle functions. An advantage of this may be that vehicle data arranged for controlling one or more vehicle functions are sent via a secure connection between each addon module and the main controller. This reduces the risk for unauthorized use of the vehicle data, it reduces the risk for unauthorized modification of the vehicle data. Vehicle data arranged for controlling one or more vehicle functions may be associated driving safety, and the driving safety is increased when the vehicle data may be sent via a secure connection.

According to a fourth aspect, the object is achieved by a heavy-duty vehicle according to claim 9. The heavy-duty vehicle comprises a main controller, the vehicle communication system of any of the first aspect and the control unit of the third aspect. Advantages and effects of the fourth aspect of the invention are similar to the advantages and effects with respect to the first aspect and/or the second aspect and/or the third aspect of the invention. It shall also be noted that all embodiments of the first aspect and/or the second aspect and/or the third aspect of the invention are applicable to and combinable with all embodiments of the fourth aspect of the invention and vice versa.

Optionally, one or more addon module(s) may be connected to the heavy-duty vehicle. According to a fifth aspect, the object is achieved by a a computer program according to claim 11. The computer program comprises program code means for performing the method of the second aspect when the computer program is run on a computer, e.g. the control unit. Advantages and effects of the fifth aspect of the invention are similar to the advantages and effects with respect to the first aspect and/or the second aspect and/or the third aspect and/or the fourth aspect of the invention. It shall also be noted that all embodiments of the first aspect and/or the second aspect and/or the third aspect and/or the fourth aspect of the invention are applicable to and combinable with all embodiments of the fifth aspect of the invention and vice versa.

According to a sixth aspect, the object is achieved by a computer readable medium according to claim 12. The computer readable medium carries a computer program comprising program code means for performing the method of the second aspect when the computer program is run on a computer, e.g. the control unit. Advantages and effects of the sixth aspect of the invention are similar to the advantages and effects with respect to the first aspect and/or the second aspect and/or the third aspect and/or the fourth aspect and/or the fifth aspect of the invention. It shall also be noted that all embodiments of the first aspect and/or the second aspect and/or the third aspect and/or the fourth aspect and/or the fifth aspect of the invention are applicable to and combinable with all embodiments of the sixth aspect of the invention and vice versa.

The present disclosure is not limited to the features and advantages mentioned above. A person skilled in the art will recognize additional features and advantages upon reading the following detailed description.

### BRIEF DESCRIPTION OF THE DRAWINGS

The present disclosure will now be described in more detail by way of example only in the following detailed description by reference to the appended drawings in which:
- Fig. 1: is a schematic drawing illustrating a heavy-duty vehicle.
- Fig. 2: is a schematic drawing illustrating a vehicle communication system.
- Fig. 3: is a flow chart illustrating a method.
- Fig. 4a: is a schematic drawing illustrating a control unit.
- Fig. 4b: is a schematic drawing illustrating a control unit.

The drawings are not necessarily to scale, and the dimensions of certain features may have been exaggerated for the sake of clarity. Emphasis is instead placed upon illustrating the principle.

### DETAILED DESCRIPTION

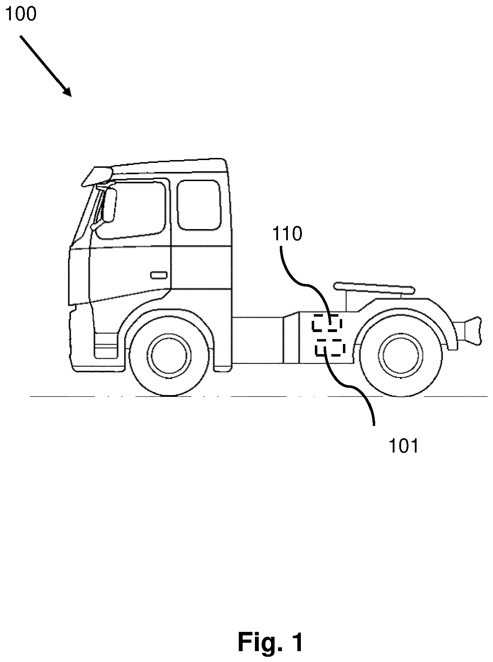

Fig. 1 is a schematic drawing illustrating a **heavy-duty vehicle 100.** The heavy-duty vehicle 100 may be for example a truck, buss and construction equipment. Although the invention may be described with respect to a truck, the invention is not restricted to this particular vehicle, but may also be used in other vehicles such as buses, trailers, wheel loaders, articulated haulers, excavators, backhoe loaders, passenger cars, marine vessels etc. It may also be applied in various industrial construction machines or working machines. It is applicable in fully electrically operated vehicles as well as in hybrid vehicles, comprising also a combustion engine, and in vehicles only operated by a combustion engine, i.e. not having any electrical engine. The term vehicle together with the reference number 100 may be used herein when referring to any of the above types of vehicles.

The vehicle 100 comprises a **main controller 101.** The main controller 101 may located at any suitable location in the vehicle 100. The main controller 101 is arranged control various functions and units comprised in the vehicle 100 such as engine control, ECU control. A telematics gateway (TGW) may be the host for the API server. The main controller 101 is arranged to communicate via a wireless and/or wired communication link with other controllers and units comprised in the vehicle 100 and with controllers and units external to the vehicle 100.

The vehicle 100 comprises a **control unit 110.** The control unit 110 is arranged to enable communication between a main controller (101) of a heavy-duty vehicle (100) and one or more addon module(s) arranged to be connected to the vehicle 100. The control unit 110 may be located at any suitable location in the vehicle 100. The control unit 110 may be located at the same location as the main controller 101, close to the main controller 101 or at a different location compared to the main controller 101. The control unit 110 may be a separate and standalone unit which is separate from the main controller 101, it may be co-located with the main controller 101, or it may be the same as the main controller 101. The control unit 110 is arranged to communicate via a wireless and/or wired communication link with other controllers and units comprised in the vehicle 100, e.g. the main controller 101, and with controllers and units external to the vehicle 100.

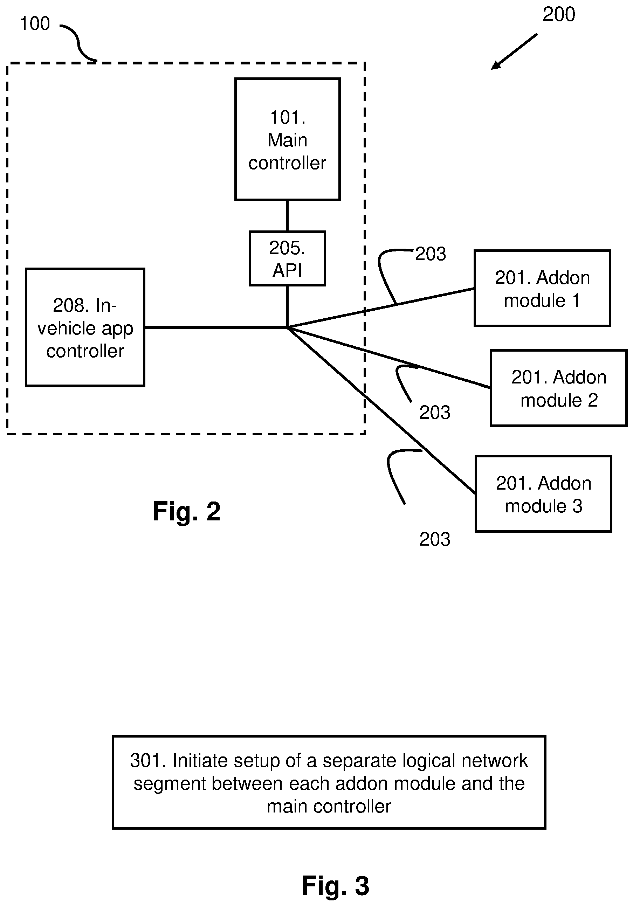

**Fig. 2** is a schematic drawing illustrating a **vehicle communication system 200.** As seen in fig. 2, the main controller 101 is comprised in the vehicle communication system 200. One or more **addon modules 201** are comprised in the vehicle communication system 200. Three addon modules 201 are exemplified in fig. 2, but any *n* number of addon modules 201 may be comprised in the vehicle communication system 200, where *n* is a positive integer. The one or more addon modules 201 may be comprised in the vehicle 100 or they may be arranged to be connected to the vehicle 100. The one or more addon modules 201 may be for example a superstructure, e.g. body, a trailer, a vehicle accessory, vehicle equipment, sensor or sensor gateway etc. A superstructure may be for example a concrete pump, a bucket, a device mounted on the vehicle's chassis to carry load or support work to be done etc.

Each addon module 203 are arranged to be connected to the vehicle 100 via a respective **logical network segment 203,** i.e. there is one logical network segment 203 per addon module 203. The one or more addon modules 203 may be arranged to be connected to the main controller 101 of the vehicle 100 via their respective logical network segment 203. The logical network segment 203 is arranged for communication between each addon module 201 and the main controller 101 and thereby enabling each addon module 201 to communicate with the main controller 101 over a separate logical network segment 203, e.g. secure IP communication. The communication that the logical network segment 203 is arranged for may comprise vehicle data arranged for controlling one or more vehicle functions such as for example controlling engine revolutions, turning a power take-off, PTO, system, controlling vehicle motion, controlling vehicle suspension, control of vehicle accessories and control of climate, etc.

The logical network segment 203 may be a container or comprised in a container. A container may be described as a software, a computer program, a computing unit etc. It may be described as an isolated process that are isolated from other processes but still running on the same kernel. With a container, an individual application may be segregated from a host operating system's other process. Rather than running an entire operating system as in a Virtual Machine (VM), a container implements only those interfaces required by the application running in the container. The container may be implemented using a Linux namespace. The container provides a logical structure configured to isolate communication related to one particular addon module 201 from at least one other form of communication by the vehicle 100, towards the networking capabilities or network segmentations of containers at a logical link layer in relation to external communications. An advantage of using the container is that it implements only those interfaces required by the service running in the container rather than running the entire operating system. Another advantage may be that the quality and speed for enabling the service on the vehicle may be improved. The container may be a docker container. The container may be implemented using a Linux namespace. A Linux namespace is adaptable to several or any type of service that is requested to be provided on the vehicle. Linux namespaces are easy to implement and may be tailormade to a particular service, if necessary.

When the vehicle communication system 200 comprises multiple logical network segment 203,i.e. when there are more than addon modules 203, the logical network segments 203 may be described as a logical communication network or a virtual communication network. The logical network segment 203 may be a communication link. Each logical network segment 203 may be a wired communication link or a wireless communication link. The logical network segment 203 may be based on any suitable technology such as for example Virtual Local Area Network (VLAN), Wi-Fi SSIDs, IPSEC SAs, BLE Generic Access Profiles etc.

Each addon module 203 may be arranged to be connected to the main controller 101 of the vehicle 100 via their respective logical network segment 203 and via an **API 205.** The API 205 may be common to all addon module 203, i.e. there may be one API 205 that is common for all addon modules 201. Access to individual APIs may be granted by the system. The main controller 101 is arranged to communicate with the one or more addon module(s) 201 via the API 205. Using other words, the main controller 101 is arranged to communicate with the logical network via the API 205, where the logical network comprises the logical network segments 203. The API 205 may be an interface, e.g. comprising a firewall function, to the vehicle 100 and enables the communication between the addon modules 201 and the vehicle 100 to be secure. Communication between connected addon modules 201 alien to the vehicle 100 are using the logical network. The API 205 may be comprised in a controller which may or may not comprise user facing applications.

In the vehicle communication system 200, there may be an **in-vehicle application (app) controller 208** arranged to directly communicate with the one or more addon modules 201 via the respective logical network segment 203. Directly connected may be described as being connected without going via any other unit before reaching the in-vehicle app controller 208. The in-vehicle app controller 208 may be common to all addon modules 201, i.e. there may be on in-vehicle app controller 208 that is common for all addon modules 201. The in-vehicle app controller 208 is arranged to communicate with the one or more addon modules 201 directly over the logical network segment 203 and not via the API 205. The in-vehicle app controller 208 comprises or is arranged to be connected one or more applications (apps) that are accessible by the user of the vehicle 100, e.g. a driver. The one or more apps may be accessible by the user of the vehicle 100 via any suitable output unit, e.g. a display. The output unit may be comprised an infotainment system of the vehicle 100, a head-up display, a User Equpiment (UE) such as a mobile phone, tablet computer etc. Each app that is accessible by the user of the vehicle 100 may be associated with one or more addon modules 203, i.e. there may be one or more apps per addon module 203. The app may be in one container and the API 205 may be made available to that container. The API 205 may be described as a resource that may be arranged to be made available to the app in its container. An app and the API 205 are on the same logical network segment 203 as the associated addon module 203. Fig. 2 shows an example with one in-vehicle app controller 208, but the vehicle 100 may comprise any suitable number of in-vehicle app controllers 208.

The vehicle communication network 200 may comprise one or more network switches (not shown in fig. 2) in the connection between addon modules 201. The one or more network switches may represent the physical layer of the vehicle communication network 200.

The method for enabling communication between a main controller 101 of a heavy-duty vehicle 100 and one or more addon module(s) 201 arranged to be connected to the heavy-duty vehicle 100 will now be described with reference to the flowchart in **fig. 3****.** The method is performed by a control unit 110 and comprises at least one of the following steps, which steps may as well be carried out in another suitable order than described below:

### Step 301

The control unit 110 initiates setup of a separate logical network segment 203 between each addon module 201 and the main controller 101, thereby enabling each addon module 201 to communicate with the main controller 101 over a separate logical network segment 203.

The setup of the separate logical network segment 203 may be triggered by an offboard configuration command, or by detection of attached hardware with a certain network configuration, or by communication with the main controller 101 by a vendor application, or by manual configuration of the vehicle 100 using parameters from an attached tool etc.

After the setup of the separate logical network segment 203, the communication between each addon module 201 and the main controller 101 may go via an API 205.

An in-vehicle app controller 208 may communicate directly to the one or more addon modules 201 via the respective logical network segment 203.

Each logical network segment 203 may be a wired communication link or a wireless communication link.

The communication between each addon module 201 and the main controller 101 via the respective logical network segment 203 may comprise vehicle data arranged for controlling one or more vehicle functions.

Each logical network segment 203 may exist until the addon module 201 is physically disconnected from the vehicle 100 or until a configuration changes.

In addition to the separate logical network segment 203 between each addon module 201 and the main controller 101 of the vehicle 100, there may be a physical connection between the addon module 201 and the vehicle 100, e.g. the trailer is physically connected to the towing truck. The physical connection may be wired or wireless, e.g. Bluetooth, Wi-Fi etc.

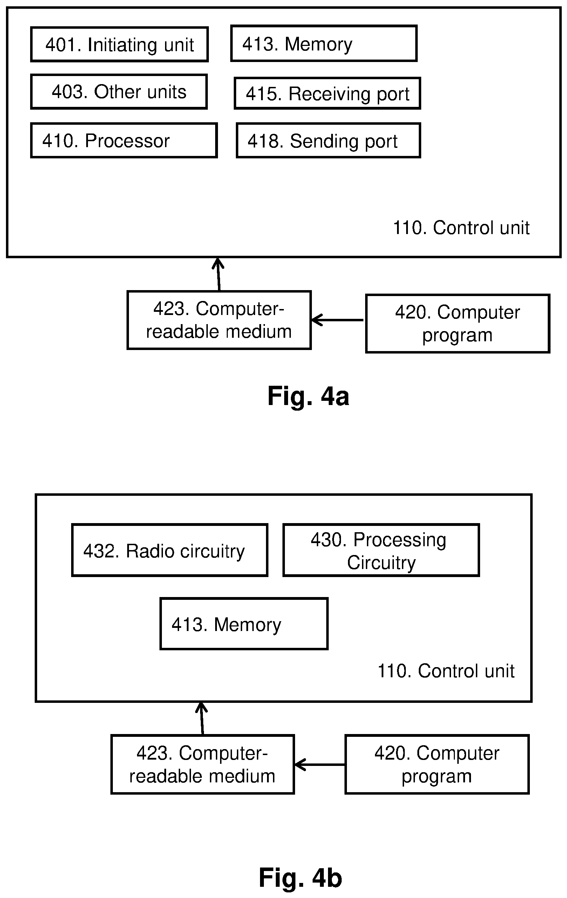

The control unit 110 is arranged to perform the method described herein. To perform the method step shown in fig. 2 for enabling communication between a main controller 101 of a heavy-duty vehicle 100 and one or more addon module(s) 201 arranged to be connected to the heavy-duty vehicle 100, the control unit 101 may comprises an arrangement as shown in **fig. 4a** and/or **fig. 4b.** Fig. 4a and fig. 40b depict two different examples in panels a) and b), respectively, of the arrangement that the control unit 110 may comprise. The control unit 110 may comprise the following arrangement depicted in fig 4a.

The control unit 110 is arranged to, e.g. by means of an **initiating unit 401,** initiate setup of a separate logical network segment 203 between each addon module 201 and the main controller 101, thereby enabling each addon module 201 to communicate with the main controller 101 over a separate logical network segment 203.

The communication between each addon module 201 and the main controller 101 may go via an API 205.

An in-vehicle app controller 208 may communicate directly to the one or more addon modules 201 via the respective logical network segment 203.

Each logical network segment 203 may be a wired communication link or a wireless communication link.

The communication between each addon module 201 and the main controller 101 via the respective logical network segment 203 may comprise vehicle data arranged for controlling one or more vehicle functions.

The present disclosure related to the control unit 110 may be implemented through one or more processors, such as a **processor 410** in the control unit 110 depicted in fig. 4a, together with computer program code for performing the functions and actions described herein. A processor, as used herein, may be understood to be a hardware component. The program code mentioned above may also be provided as a computer program product, for instance in the form of a data carrier carrying computer program code for performing the present disclosure when being loaded into the control unit 110. One such carrier may be in the form of a CD ROM disc. It is however feasible with other data carriers such as a memory stick. The computer program code may be provided as pure program code on a server and downloaded to the control unit 110.

The control unit 110 may comprise a **memory 413** comprising one or more memory units. The memory 413 is arranged to be used to store obtained information, store data, configurations, schedulings, and applications etc. to perform the methods herein when being executed in the control unit 110.

The control unit 110 may receive information from, e.g. the main controller 101, one or more addon modules 203, through a **receiving port 415.** The receiving port 415 may be, for example, connected to one or more antennas in control unit 110. The control unit 110 may receive information from another structure in the vehicle communications system 200 through the receiving port 415. Since the receiving port 415 may be in communication with the processor 410, the receiving port 415 may then send the received information to the processor 410. The receiving port 415 may also be configured to receive other information.

The processor 410 in the control unit 110 may be configured to transmit or send information to e.g. main controller 101, one or more addon modules 201 or another structure in the vehicle communications system 100, through a **sending port 418,** which may be in communication with the processor 410, and the memory 413.

The UE 105 may comprise the initiating unit 401, other unit(s) 403 etc.

Those skilled in the art will also appreciate that the initiating unit 401, other unit(s) 403 etc. described above may refer to a combination of analogue and digital circuits, and/or one or more processors configured with software and/or firmware, e.g., stored in memory, that, when executed by the one or more processors such as the processor 410, perform as described above. One or more of these processors, as well as the other digital hardware, may be comprised in a single Application-Specific Integrated Circuit (ASIC), or several processors and various digital hardware may be distributed among several separate components, whether individually packaged or assembled into a System-on-a-Chip (SoC).

The different units 401-403 described above may be implemented as one or more applications running on one or more processors such as the processor 410.

Thus, the methods described herein for the control unit 110 may be respectively implemented by means of a **computer program 420** product, comprising instructions, i.e., software code portions, which, when executed on at least one processor 1001, cause the at least one processor 410 to carry out the actions described herein, as performed by the control unit 110. The computer program 420 product may be stored on a **computer-readable storage medium 423.** The computer-readable storage medium 423, having stored thereon the computer program 420, may comprise instructions which, when executed on at least one processor 410, cause the at least one processor 410 to carry out the actions described herein, as performed by the control unit 110. The computer-readable storage medium 423 may be a non-transitory computer-readable storage medium, such as a CD ROM disc, or a memory stick. The computer program 420 product may be stored on a carrier containing the computer program 420 just described, wherein the carrier is one of an electronic signal, optical signal, radio signal, or the first computer-readable storage medium 423, as described above.

The control unit 110 may comprise a communication interface configured to facilitate communications between the control unit 110 and other nodes or devices, e.g., the main controller 101, one or more addon modules 201, or another structure. The interface may comprise a transceiver configured to transmit and receive radio signals over an air interface in accordance with a suitable standard.

The control unit 110 may comprise the following arrangement depicted in fig. 4b. The control unit 110 may comprise a **processing circuitry 430,** e.g., one or more processors such as the processor 410, in the control unit 110 and the memory 413. The control unit 110 may also comprise a **radio circuitry 432,** which may comprise e.g., the receiving port 415 and the sending port 418. The processing circuitry 430 may be configured to, or operable to, perform the method actions according to fig. 3, in a similar manner as that described in relation to fig. 4a. The radio circuitry 432 may be configured to set up and maintain at least a wireless connection with the control unit 110. Circuitry may be understood herein as a hardware component.

Hence, the present disclosure also relates to the control unit 110 operative to operate in the vehicle communications system 200. The control unit 110 may comprise the processing circuitry 430 and the memory 413. The memory 413 comprises instructions executable by the processing circuitry 430. The control unit 110 is operative to perform the actions described herein in relation to the control unit 110, e.g., in fig. 3.

Summarized, in the vehicle communication system 200 the one or more addon modules 201 are connected to the vehicle 100 in a virtual communication network using the logical network segments 201, wired or wirelessly, to isolate it from the rest of the vehicle 100. Vehicle data and functions that will affect the vehicle 100, like controlling engine revolutions, PTO On/Off etc., may be made available over an API 205 that is secure and access controlled.

The logical network segments 201 may also be connected directly into the in-vehicle app controller 208 to offer flexibility in solutions.

With the logical network segments 201, 3rd parties associated with the addon modules 201 will be able to customize their solution with secure connection to vehicle data, driver interaction via in-vehicle android apps and cloud connections over internet.

The logical network segment 203 is arranged for communication between each addon module 201 and the main controller 101 and thereby enabling each addon module 201 to communicate with the main controller 101 over a separate logical network segment 203, e.g. secure IP communication.

In general, the usage of "first", "second", "third", "fourth", and/or "fifth" herein may be understood to be an arbitrary way to denote different elements or entities and may be understood to not confer a cumulative or chronological character to the nouns they modify, unless otherwise noted, based on context.

The present disclosure is not limited to the above. Various alternatives, modifications and equivalents may be used. Therefore, disclosure herein should not be taken as limiting the scope. A feature may be combined with one or more other features.

The term "at least one of A and B" should be understood to mean "only A, only B, or both A and B.", where A and B are any parameter, number, indication used herein etc.

It should be emphasized that the term "comprises/comprising" when used in this specification is taken to specify the presence of stated features, integers, steps or components, but does not preclude the presence or addition of one or more other features, integers, steps, components or groups thereof. It should also be noted that the words "a" or "an" preceding an element do not exclude the presence of a plurality of such elements.

The term "configured to" used herein may also be referred to as "arranged to", "adapted to", "capable of" or "operative to".

The steps of the methods may be performed in another order than the order in which they appear herein.

## Claims

1. A vehicle communication system (200) for enabling communication between a main controller (101) of a heavy-duty vehicle (100) and one or more addon module(s) (201) arranged to be connected to the heavy-duty vehicle (100), the vehicle communication system (200) comprises:
a logical network segment (203) arranged for communication between each addon module (201) and the main controller (101) thereby enabling each addon module (201) to communicate with the main controller (101) over a separate logical network segment (203),
wherein the one or more addon module(s) (201) is one or more of a superstructure, a trailer, a vehicle accessory, a vehicle equipment, a sensor or a sensor gateway, and
wherein the vehicle communication system (200) comprises an in-vehicle application controller (208) arranged to directly communicate with the one or more addon modules (201) via the respective logical network segment (203), and
wherein the in-vehicle application controller (208) is common for all addon modules (201),
wherein the in-vehicle application controller (208) is arranged to be connected to one or more applications that are accessible by the user of the vehicle (100) and each one or more applications are associated with the one or more addon module(s) (201);
wherein the in-vehicle application controller (208) is arranged to host applications from multiple vendors, and
wherein the in-vehicle application controller (208) is arranged to allow users to interface with the one or more addon module(s) (201) without any need for installation of addon module vendor specific systems.

2. The vehicle communication system (200) according to claim 1, wherein the main controller (101) is arranged to communicate with the one or more addon module(s) (201) via an Application Program Interface, API (205).

3. The vehicle communication system (200) according to any of the preceding claims, wherein each logical network segment (203) is a wired communication link or a wireless communication link.

4. The vehicle communication system (200) according to any of the preceding claims, wherein the communication that the logical network segment (203) is arranged for comprises vehicle data arranged for controlling one or more vehicle functions.

5. A method performed by vehicle communication system (200) for enabling communication between a main controller (101) of a heavy-duty vehicle (100) and one or more addon module(s) (201) arranged to be connected to the heavy-duty vehicle (100), the method comprising:
*initiating* (301), by a control unit (110) of the vehicle communication system, setup of a separate logical network segment (203) between each addon module (201) and the main controller (101), wherein the one or more addon module(s) (201) is one or more of a superstructure, a trailer, a vehicle accessory, a vehicle equipment, a sensor or a sensor gateway;
*associating* each logical network segment (203) with a respective addon module (201) and with an in-vehicle application controller (208) that is common for all addon modules (201), wherein the in-vehicle application controller (208) communicates directly to the one or more addon modules (201) via the respective logical network segment (203);
*hosting,* in the in-vehicle application controller (208), one or more applications from multiple vendors, each application being associated with a respective addon module (201); and
*enabling* user access to the one or more addon module(s) (201) without requiring installation of addon module vendor specific systems.

6. The method according to claim 5, wherein the communication between each addon module (201) and the main controller (101) goes via an Application Program Interface, API (205).

7. The method according to any of claims 5-6, wherein each logical network segment (203) is a wired communication link or a wireless communication link.

8. The method according to any of claims 5-7, wherein the communication between each addon module (201) and the main controller (101) via the respective logical network segment (203) comprises vehicle data arranged for controlling one or more vehicle functions.

9. A heavy-duty vehicle (100) comprising the vehicle communication system (200) of any of claims 1-4 and a control unit (110) arranged to perform the respective step of the method of claim 5.

10. A heavy-duty vehicle (100) according to claim 9, wherein one or more addon module(s) (201) are connected to the heavy-duty vehicle (100).

11. A computer program comprising program code means for performing the steps of any of claims 5-8 when the computer program is run on a computer.

12. A computer readable medium carrying a computer program comprising program code means for performing the steps of any of claims 5-8 when the computer program is run on a computer.

## Patentansprüche

1. Fahrzeugkommunikationssystem (200) zum Ermöglichen einer Kommunikation zwischen einer Hauptsteuerung (101) eines Schwerlastfahrzeugs (100) und einem oder mehreren Zusatzmodul(en) (201), die angeordnet sind, um mit dem Schwerlastfahrzeug (100) verbunden zu werden, wobei das Fahrzeugkommunikationssystem (200) umfasst:
ein Logiknetzwerksegment (203), das für eine Kommunikation zwischen jedem Zusatzmodul (201) und der Hauptsteuerung (101) angeordnet ist, wodurch jedem Zusatzmodul (201) ermöglicht wird, mit der Hauptsteuerung (101) über ein separates Logiknetzwerksegment (203) zu kommunizieren,
wobei das eine oder die mehreren Zusatzmodul(e) (201) eines oder mehrere von einem Oberwagen, einem Anhänger, einem Fahrzeugzubehör, einer Fahrzeugausstattung, einem Sensor oder einem Sensor-Gateway ist, und
wobei das Fahrzeugkommunikationssystem (200) eine fahrzeuginterne Anwendungssteuerung (208) umfasst, die angeordnet ist, um direkt mit dem einen oder den mehreren Zusatzmodulen (201) über das jeweilige Logiknetzwerksegment (203) zu kommunizieren, und
wobei die fahrzeuginterne Anwendungssteuerung (208) allen Zusatzmodulen (201) gemeinsam ist,
wobei die fahrzeuginterne Anwendungssteuerung (208) angeordnet ist, um mit einer oder mehreren Anwendungen verbunden zu werden, die für den Benutzer des Fahrzeugs (100) zugänglich sind, und jede der einen oder der mehreren Anwendungen dem einen oder den mehreren Zusatzmodul(en) (201) zugeordnet ist;
wobei die fahrzeuginterne Anwendungssteuerung (208) angeordnet ist, um Anwendungen von mehreren Anbietern zu hosten, und
wobei die fahrzeuginterne Anwendungssteuerung (208) angeordnet ist, um Benutzern zu erlauben, mit dem einen oder den mehreren Zusatzmodul(en) (201) zu interagieren, ohne dass eine Installation von Zusatzmodulanbieterspezifischen Systemen erforderlich ist.

2. Fahrzeugkommunikationssystem (200) nach Anspruch 1, wobei die Hauptsteuerung (101) angeordnet ist, um mit dem einen oder den mehreren Zusatzmodul(en) (201) über eine Anwendungsprogrammschnittstelle, API (205), zu kommunizieren.

3. Fahrzeugkommunikationssystem (200) nach einem der vorstehenden Ansprüche, wobei jedes Logiknetzwerksegment (203) eine drahtgebundene Kommunikationsverknüpfung oder eine drahtlose Kommunikationsverknüpfung ist.

4. Fahrzeugkommunikationssystem (200) nach einem der vorstehenden Ansprüche, wobei die Kommunikation, für die das Logiknetzwerksegment (203) angeordnet ist, Fahrzeugdaten umfasst, die zum Steuern einer oder mehrerer Fahrzeugfunktionen angeordnet sind.

5. Verfahren, das durch das Fahrzeugkommunikationssystem (200) durchgeführt wird, zum Ermöglichen der Kommunikation zwischen einer Hauptsteuerung (101) eines Schwerlastfahrzeugs (100) und einem oder mehreren Zusatzmodul(en) (201), die angeordnet sind, um mit dem Schwerlastfahrzeug (100) verbunden zu werden, das Verfahren umfassend:
*Initiieren* (301), durch eine Steuereinheit (110) des Fahrzeugkommunikationssystems, einer Einrichtung eines separaten Logiknetzwerksegments (203) zwischen jedem Zusatzmodul (201) und der Hauptsteuerung (101), wobei das eine oder die mehreren Zusatzmodul(e) (201) eines oder mehrere von einem Oberwagen, einem Anhänger, einem Fahrzeugzubehör, einer Fahrzeugausrüstung, einem Sensor oder einem Sensor-Gateway ist;
*Zuordnen* jedes Logiknetzwerksegments (203) zu einem jeweiligen Zusatzmodul (201) und zu einer fahrzeuginternen Anwendungssteuerung (208), die allen Zusatzmodulen (201) gemeinsam ist, wobei die fahrzeuginterne Anwendungssteuerung (208) mit dem einen oder den mehreren Zusatzmodulen (201) über das jeweilige Logiknetzwerksegment (203) direkt kommuniziert;
*Hosten,* in der fahrzeuginternen Anwendungssteuerung (208), einer oder mehrerer Anwendungen von mehreren Anbietern, wobei jede Anwendung einem jeweiligen Zusatzmodul (201) zugeordnet ist; und
*Ermöglichen* eines Benutzerzugangs zu dem einen oder den mehreren Zusatzmodul(en) (201), ohne dass eine Installation von Zusatzmodulanbieterspezifischen Systemen erforderlich ist.

6. Verfahren nach Anspruch 5, wobei die Kommunikation zwischen jedem Zusatzmodul (201) und der Hauptsteuerung (101) über eine Anwendungsprogrammschnittstelle, API (205), erfolgt.

7. Verfahren nach einem der Ansprüche 5 bis 6, wobei jedes Logiknetzwerksegment (203) eine drahtgebundene Kommunikationsverknüpfung oder eine drahtlose Kommunikationsverknüpfung ist.

8. Verfahren nach einem der Ansprüche 5 bis 7, wobei die Kommunikation zwischen jedem Zusatzmodul (201) und der Hauptsteuerung (101) über das jeweilige Logiknetzwerksegment (203) Fahrzeugdaten umfasst, die zum Steuern einer oder mehrerer Fahrzeugfunktionen angeordnet sind.

9. Schwerlastfahrzeug (100), umfassend das Fahrzeugkommunikationssystem (200) nach einem der Ansprüche 1 bis 4 und eine Steuereinheit (110), die angeordnet ist, um den jeweiligen Schritt des Verfahrens nach Anspruch 5 durchzuführen.

10. Schwerlastfahrzeug (100) nach Anspruch 9, wobei ein oder mehrere Zusatzmodul(e) (201) mit dem Schwerlastfahrzeug (100) verbunden sind.

11. Computerprogramm, umfassend Programmcodemittel zum Durchführen der Schritte nach einem der Ansprüche 5 bis 8, wenn das Computerprogramm auf einem Computer ausgeführt wird.

12. Computerlesbares Medium, das ein Computerprogramm trägt, umfassend Programmcodemittel zum Durchführen der Schritte nach einem der Ansprüche 5 bis 8, wenn das Computerprogramm auf einem Computer ausgeführt wird.

## Revendications

1. Système de communication de véhicule (200) permettant de permettre une communication entre un dispositif de commande principal (101) d'un véhicule utilitaire lourd (100) et un ou plusieurs modules complémentaires (201) conçus pour être connectés au véhicule utilitaire lourd (100), le système de communication de véhicule (200) comprend :
un segment de réseau logique (203) agencé pour une communication entre chaque module complémentaire (201) et le dispositif de commande principal (101), permettant ainsi à chaque module complémentaire (201) de communiquer avec le dispositif de commande principal (101) sur un segment de réseau logique distinct (203),
dans lequel le ou les modules complémentaires (201) sont un ou plusieurs parmi une superstructure, une remorque, un accessoire de véhicule, un équipement de véhicule, un capteur ou une passerelle de capteur, et
dans lequel le système de communication de véhicule (200) comprend un dispositif de commande d'application embarqué (208) conçu pour communiquer directement avec le ou les modules complémentaires (201) par l'intermédiaire du segment de réseau logique respectif (203), et
dans lequel le dispositif de commande d'application embarqué (208) est commun à tous les modules complémentaires (201),
dans lequel le dispositif de commande d'application embarqué (208) est conçu pour être connecté à une ou plusieurs applications accessibles par l'utilisateur du véhicule (100) et chacune ou les applications sont associées au ou aux modules complémentaires (201) ;
dans lequel le dispositif de commande d'application embarqué (208) est conçu pour héberger des applications provenant de multiples fournisseurs, et
dans lequel le dispositif de commande d'application embarqué (208) est conçu pour permettre à des utilisateurs de s'interfacer avec le ou les modules complémentaires (201) sans aucun besoin d'installation de systèmes spécifiques au fournisseur de modules complémentaires.

2. Système de communication de véhicule (200) selon la revendication 1, dans lequel le dispositif de commande principal (101) est conçu pour communiquer avec le ou les modules complémentaires (201) par l'intermédiaire d'une interface de programmation d'application, API (205).

3. Système de communication de véhicule (200) selon l'une quelconque des revendications précédentes, dans lequel chaque segment de réseau logique (203) est une liaison de communication filaire ou une liaison de communication sans fil

4. Système de communication de véhicule (200) selon l'une quelconque des revendications précédentes, dans lequel la communication pour laquelle le segment de réseau logique (203) est conçu, comprend des données de véhicule conçues pour commander une ou plusieurs fonctions de véhicule.

5. Procédé mis en œuvre par le système de communication de véhicule (200) pour permettre une communication entre un dispositif de commande principal (101) d'un véhicule utilitaire lourd (100) et un ou plusieurs modules complémentaires (201) conçus pour être connectés au véhicule utilitaire lourd (100), le procédé comprenant :
*le lancement* (301), par une unité de commande (110) du système de communication de véhicule, de la configuration d'un segment de réseau logique distinct (203) entre chaque module complémentaire (201) et le dispositif de commande principal (101), dans lequel le ou les modules complémentaires (201) sont un ou plusieurs parmi une superstructure, une remorque, un accessoire de véhicule, un équipement de véhicule, un capteur ou une passerelle de capteur ;
*l'association* de chaque segment de réseau logique (203) à un module complémentaire (201) respectif et à un dispositif de commande d'application embarqué (208) qui est commun à tous les modules complémentaires (201), dans lequel le dispositif de commande d'application embarqué (208) communique directement au ou aux modules complémentaires (201) par l'intermédiaire du segment de réseau logique respectif (203) ;
*l'hébergement,* dans le dispositif de commande d'application embarqué (208), d'une ou de plusieurs applications provenant de multiples fournisseurs, chaque application étant associée à un module complémentaire respectif (201) ; et
*la possibilité* pour l'utilisateur d'accéder au ou aux modules complémentaires (201) sans nécessiter l'installation de systèmes spécifiques au fournisseur de modules complémentaires.

6. Procédé selon la revendication 5, dans lequel la communication entre chaque module complémentaire (201) et le dispositif de commande principal (101) passe par l'intermédiaire d'une interface de programmation
d'application, API (205).

7. Procédé selon l'une quelconque des revendications 5 à 6, dans lequel chaque segment de réseau logique (203) est une liaison de communication filaire ou une liaison de communication sans fil.

8. Procédé selon l'une quelconque des revendications 5 à 7, dans lequel la communication entre chaque module complémentaire (201) et le dispositif de commande principal (101) par l'intermédiaire du segment de réseau logique respectif (203) comprend des données de véhicule conçues pour commander une ou plusieurs fonctions de véhicule.

9. Véhicule utilitaire lourd (100) comprenant le système de communication de véhicule (200) selon l'une quelconque des revendications 1 à 4 et une unité de commande (110) conçue pour réaliser l'étape respective du procédé selon la revendication 5.

10. Véhicule utilitaire lourd (100) selon la revendication 9, dans lequel un ou plusieurs modules complémentaires (201) sont connectés au véhicule utilitaire lourd (100).

11. Programme informatique comprenant un moyen de code de programme permettant de réaliser les étapes selon l'une quelconque des revendications 5 à 8 lorsque le programme informatique est exécuté sur un ordinateur.

12. Support lisible par ordinateur contenant un programme informatique comprenant un moyen de code de programme pour réaliser les étapes selon l'une quelconque des revendications 5 à 8 lorsque le programme informatique est exécuté sur un ordinateur.
